# EUROPÄISCHE PATENTANMELDUNG

(11) **EP 1 777 444 A2**
(43) Veröffentlichungstag der Anmeldung: **25.04.2007**
(21) Anmeldenummer: 06021496.2
(22) Anmeldetag: 13.10.2006
(51) Int. Cl.: F16J 15/08

(54) **Metallische Flachdichtung und Verfahren zu deren Herstellung**

(30) Priorität: 24.10.2005 DE 102005050837
(71) Anmelder: REINZ-Dichtungs-GmbH, 89233 Neu-Ulm (DE)
(72) Erfinder: Göttler, Andreas, 89073 Neu-Ulm (DE); Höhe, Kurt, 89129 Langenau (DE); Ruess, Bernd, 89269 Vöhringen (DE)
(74) Vertreter: Pfenning, Meinig & Partner GbR

(57) **Zusammenfassung**

Die Erfindung betrifft eine metallische Flachdichtung zur Abdichtung von zwei Bauteilen gegeneinander aus mindestens einer ersten metallischen Lage mit mindestens einer Durchgangsöffnung und mit einer in der mindestens einen Durchgangsöffnung befestigten zweiten metallischen Lage, wobei die zweite metallische Lage in die mindestens eine Durchgangsöffnung der ersten metallischen Lage einen Spalt bildend eingefügt ist.

## Beschreibung

Die Erfindung betrifft eine metallische Flachdichtung zur Abdichtung von zwei Bauteilen gegeneinander aus mindestens einer ersten metallischen Lage mit mindestens einer Durchgangsöffnung und mit einer in der mindestens einen Durchgangsöffnung befestigten zweiten metallischen Lage, wobei die Befestigung der zweiten metallischen Lage durch eine speziell ausgebildete Prägung durchgeführt worden ist.

Metallische Flachdichtungen zum Abdichten von zwei Bauteilen gegeneinander, bei denen in einer ersten metallischen Lage mit mindestens einer Durchgangsöffnung eine zweite metallische Lage, ein sog. Insert, befestigt ist, sind im Stand der Technik bekannt. Bei der Insertbefestigung werden dabei normalerweise sog. Befestigungsbalkone angeprägt, auf denen später die Inserts zu liegen kommen. Daneben ist es im Stand der Technik bei ausreichend dicken Bauteilen auch üblich, dass der Insert mit dem Trägerblech der Dichtung verstemmt wird. Dabei werden beim Verstemmen die Kräfte direkt in das Bauelement eingeleitet. Es stellt sich ein Kräftegleichgewicht durch sich gegenüber liegende Krafteinleitungspunkte ein. Nur durch dieses Kräftegleichgewicht wird der Insert festgehalten. Dies führt aber zu Spannungen im Bauteil, die zu Ermüdungserscheinungen und Undichtigkeiten führen können. Nachteilig dabei ist, dass das Anprägen derartiger Balkone hohe Prägekräfte erfordert und gleichzeitig einen großen Werkzeugverschleiß verursacht. Ungünstig ist weiterhin, dass das anschließende Verschweißen der Inserts mit dem Trägerblech einen zusätzlichen Werkzeugaufwand und teure Verbindungsverfahren erfordert.

Ausgehend hiervon ist es Aufgabe der vorliegenden Erfindung, eine wie vorstehend beschriebene metallische Flachdichtung anzugeben, die einfach und kostengünstig in der Herstellung ist und die zu einem spannungsfreien Einbau von Inserts in das metallische Material führt.

Diese Aufgabe wird durch die Merkmale des Patentanspruches 1 gelöst. Die Unteransprüche zeigen vorteilhafte Weiterbildungen auf.

Wesentliches Element der Erfindung ist es nun, dass die zweite metallische Lage, die das Insert bildet, in der ersten metallischen Lage der Dichtung über mindestens einen Verbindungsbereich abschnittsweise form- und/oder kraftschlüssig befestigt ist. Dieser Verbindungsbereich besteht aus mindestens einer Vorsprung/Ausnehmung/Vorsprung-Kombination in einer metallischen Lage sowie einer mindestens komplementären Struktur in der anderen metallischen Lage. Die Vorsprünge der die Vorsprung/Ausnehmung/Vorsprung-Kombination aufweisenden Lage übergreifen dabei die andere Lage im Bereich von deren Ausnehmungen so von der Ober- und Unterseite, dass mehrfach abschnittsweise eine Freimachung vorhanden ist. Fortlaufend befindet sich zwischen den beiden Lagen ein Spalt, der im Verbindungsbereich in diese Freimachungen übergeht. Aufgrund dieses Spalts und dieser Freimachungen sind beide Lagen der Dichtung zwar abschnittsweise form- und/oder kraftschlüssig miteinander verbunden, diese Lagen weisen jedoch keine Spannungen auf. Wohl aber ist das Material der die Vorsprünge aufweisenden Lage in diesem Bereich zumindest abschnittsweise dünner als im übrigen Bereich der Lage. Die Vorsprung/Ausnehmung/Vorsprung-Kombination kann dabei entweder in der ersten oder zweiten metallischen Lage vorhanden sein.

Bei der Herstellung der erfindungsgemäßen metallischen Flachdichtung erfolgt die Ausbildung der Vorsprung/Ausnehmung/Vorsprung-Kombination in der aus dickerem Material bestehenden Lage bzw. der komplementären Struktur in der das dünnere Material aufweisenden Lage üblicherweise durch einfaches Stanzen. Alternativ sind auch andere Schnittverfahren, wie z.B. Laserschneiden, denkbar. Die Verbindung selbst wird dann durch einen Prägevorgang hergestellt. Dazu wird die zweite metallische Lage, also der Insert, so in die erste metallische Lage eingefügt, dass die Vorsprung/Ausnehmung/Vorsprung-Kombination unter Belassung von Spalt und Freimachung in der mindestens komplementären Struktur zu liegen kommt. Im eigentlichen Prägeschritt werden die Vorsprünge der Vorsprung/Ausnehmung/Vorsprung-Kombination verpresst; das etwas dickere Material eines Vorsprungs wächst dabei auf der Ober- und Unterseite über das benachbarte dünnere Material der anderen metallischen Lage und realisiert damit eine form- und/oder kraftschlüssige Verbindung. Es ist dabei bevorzugt, dass das Material über den Bereich der andere Lage wächst, der die Ausnehmungen der komplementären Struktur nach außen hin begrenzt. Der Zuschnitt der Vorsprung/Ausnehmung/Vorsprung-Kombination und ihre komplementäre Struktur sind dabei so gestaltet, dass auch nach dem Prägeschritt abschnittsweise eine verkleinerte Freimachung sowie fortlaufend der Spalt zwischen den beiden Lagen verbleibt. Die Gestaltung der Freimachung beim Stanzen der Lagen gewährleistet einen ausreichenden Spielraum für die Materialverdrängung während des Prägeschritts und sorgt so für eine - abgesehen von der Druckspannung im Bereich der Vorsprünge - spannungsfreie Befestigung der zweiten metallischen Lage in die erste metallische Lage.

Der Vorsprung des die Vorsprung/Ausnehmung/Vorsprung-Kombination aufweisenden Verbindungsbereiches ist dabei bevorzugt rechteckig, tropfenförmig, trapezförmig und/oder flammenförmig. Wesentlich dabei ist, dass die Vorsprung/Ausnehmung/Vorsprung-Kombination und die dazu mindestens komplementäre Struktur vor dem Prägen relativ zueinander so gestaltet sind, dass es beim Prägen abschnittsweise zum Übergreifen der Vorsprünge kommt und dennoch in anderen Abschnitten ein Spalt bzw. eine verkleinerte Freimachung verbleibt. Diese Gestaltung ist wesentlich für einen spannungsfreien Einbau. Der Spalt weist im unverpressten Zustand umlaufend eine Breite von mindestens 0,1 mm, bevorzugt mindestens 0,5 mm auf; im Bereich der Freimachungen verbreitert er sich zumindest abschnittsweise auf mindestens 0,5 mm, bevorzugt mehr als 1 mm. Es sind auch Abschnitte mit 2 mm Breite oder mehr möglich. Durch das Verpressen ändert sich die Breite nur im Bereich der Freimachungen, der Grad der Verpressung hängt auch von den angewandten Pressungskräften ab. Die Breite der Freimachung nach Verpressung sollte mindestens noch 0,2 mm betragen. Es ist aber bevorzugt, wenn sie bereiter ist.

Es hat sich weiterhin als günstig herausgestellt, wenn die Vorsprung/Ausnehmung/Vorsprung-Kombination in der Dimensionierung so gewählt ist, dass die mittlere Breite der Ausnehmung kleiner ist als das zweifache der Summe, bevorzugt als die Summe der mittleren Bereiche der Vorsprünge. Ganz besonders günstig ist es, wenn die mittlere Breite der Ausnehmung das 0,8 bis 1,2-fache des Mittelwertes der Breite der Vorsprünge beträgt. Eine symmetrische Gestaltung der Vorsprung/Ausnehmung/Vorsprung-Kombination sorgt überdies für eine gleichmäßige Krafteinleitung während des Prägeprozesses und ist deshalb vorteilhaft für die Stabilität der Verbindung.

Die Anzahl der Verbindungsbereiche aus der Vorsprung/Ausnehmung/Vorsprung-Kombination ist dabei in Abhängigkeit von der Geometrie der Durchgangsöffnung zu wählen. Bevorzugt sind dabei zur sicheren Befestigung der zweiten metallischen Lage, d.h. des Inserts, in der ersten metallischen Lage mindestens zwei Verbindungsbereiche. Es kann dabei so vorgegangen werden, dass, bezogen auf den Schwerpunkt der zweiten metallischen Lage, d.h. des Inserts, die Verbindungsbereiche um mindestens 30 °, bevorzugt um mindestens 60 ° des Kreiswinkels versetzt angeordnet sind. Vorteilhaft ist es dabei, wenn die Verbindungsbereiche an mindestens zwei Seiten der Durchgangsöffnungen, bevorzugt an zwei gegenüberliegenden Seiten der Durchgangsöffnungen, angeordnet sind.

Neben den Verbindungsbereichen mit der Vorsprung/Ausnehmung/Vorsprung-Kombination können gemäß der vorliegenden Erfindung auch noch zusätzliche Verbindungsstellen aus einfachen Vorsprüngen und komplementären Ausnehmungen ausgebildet sein. Wesentlich ist jeweils immer, dass zumindest ein Verbindungsbereich aus einer Vorsprung/Ausnehmung/Vorsprung-Kombination vorhanden ist.

Die Ausbildung der Vorsprünge kann dabei herausragend und/oder als Rücksprung in der Lage selbst ausgebildet sein.

Aus stofflicher Sicht ist es dabei günstig, wenn die die Vorsprünge der Vorsprung/Ausnehmung/Vorsprung-Kombination aufweisenden metallischen Lage aus einem verformbaren Metall, bevorzugt aus Stahl, Kupfer und Kupferlegierungen, insbesondere aus verformbarem Kohlenstoffstahl und/oder verformbarem Edelstahl besteht. Die Materialstärke der metallischen Lage im Verbindungsbereich, der die Vorsprung/Ausnehmung/Vorsprung-Kombination aufweist, muss dabei größer sein, als die Materialstärke im Bereich, der die komplementären Strukturen aufweisenden anderen metallischen Lage. Nur so kann das Material der die Vorsprung/Ausnehmung/Vorsprung-Kombination aufweisenden Lage partiell auf der Ober- und Unterseite über die komplementäre Struktur der anderen Lage wachsen. Die Materialstärke der Vorsprünge der die Vorsprung/Ausnehmung/Vorsprung-Kombination bildenden Lage kann dabei im Bereich von 0,3 bis 3 mm, bevorzugt 0,5 bis 1,5 mm, betragen. Die Materialstärke der anderen Lage sollte mindestens 0,2 mm geringer sein, sie beträgt üblicherweise 0,1 bis 1 mm, bevorzugt 0,2 bis 0,5 mm.

Wie an und für sich im Stand der Technik bekannt, kann die in die erste metallische Lage eingesetzte zweite metallische Lage, d.h. das Insert, mindestens einen Durchbruch aufweisen. Der Durchbruch kann dabei auch stirnseitig mit einem Elastomer zur besseren Abdichtung des Durchbruchs in dem Insert umspritzt sein. Gemäß der vorliegenden Erfindung ist es aber auch weiterhin möglich, dass das Insert, d.h. die zweite metallische Lage, mit oder ohne Durchbruch oberflächlich mit mindestens einer Raupe aus einem Elastomer, das angespritzt worden ist, versehen ist.

Die erfindungsgemäße metallische Flachdichtung kann entweder als Einlagendichtung oder auch als Mehrlagendichtung, bezogen auf die Gesamtfläche der Dichtung, ausgebildet sein.

Im Falle einer Mehrlagendichtung bildet dabei dann die erste metallische Lage ein Trägerblech, auf dem mindestens ein weiteres Blech, bevorzugt ein Deckblech, angeordnet sein kann. Die entsprechenden Durchbrüche im Trägerblech bzw. im Deckblech sind komplementär ausgebildet. Im Falle der Ausführungsform einer Mehrlagendichtung ist es dabei auch möglich, dass das auf dem Trägerblech angeordnete metallische Deckblech ebenfalls Vorsprünge aufweist, die jeweils über eine Kröpfung in einer entsprechenden Ausnehmung im Trägerblech zu liegen kommen. Mit diesen zusätzlichen Vorsprüngen kann dann über eine komplementäre Ausnehmung im Trägerblech, diese von der Ober- und Unterseite mindestens teilweise übergreifend, eine zusätzliche Befestigung hergestellt werden. Die Erfindung schließt selbstverständlich auch Mehrlagenvarianten mit ein, bei denen das Trägerblech beidseitig mit Deckblechen versehen ist. Auch ist die Anordnung eines zusätzlichen Distanzbleches unproblematisch.

Die Erfindung betrifft weiterhin ein Verfahren zur Herstellung einer metallischen Flachdichtung, wie vorstehend beschrieben. Erfindungsgemäß wird dabei so vorgegangen, dass die zweite metallische Lage in die erste metallische Lage unter Belassung eines umlaufenden Spaltes mit abschnittsweisen Freimachungen eingefügt wird und dass dann durch ein Prägeverfahren mindestens die Vorsprünge der Vorsprung/Ausnehmung/Vorsprung-Kombination so verformt werden, dass ein Form- und/oder Kraftschluss im Verbindungsbereich zwischen den Vorsprüngen der einen metallischen Lage und der anderen Lage im Bereich von deren komplementären Ausnehmungen eintritt. Das erfindungsgemäße Verfahren zeichnet sich besonders dadurch aus, dass es im Vergleich zu den Verfahren des Standes der Technik sehr kostengünstig ist. Beim erfindungsgemäßen Verfahren können die im Verbindungsbereich vorgesehenen Vorsprung/Ausnehmung/Vorsprung-Kombination aufweisenden Lagen bzw. deren komplementären Strukturen in der anderen metallischen Lage durch ein einfaches Stanzverfahren hergestellt werden. Die Ausbildung des Verbindungsbereiches kann dabei gleichzeitig mit dem Ausstanzen der weiteren in den metallischen Lagen vorgesehen Strukturen bzw. Durchbrüchen erfolgen. Dadurch wird eine deutliche Kostenreduktion zu den Verfahren des Standes der Technik erreicht, bei denen separat ein Prägezäpfchen oder ein Balkon angeformt werden muss. Auch entfällt beim erfindungsgemäßen Verfahren ein aufwendiger Schweißprozess, da die Verbindungsbildung durch ein Prägeverfahren durchgeführt wird.

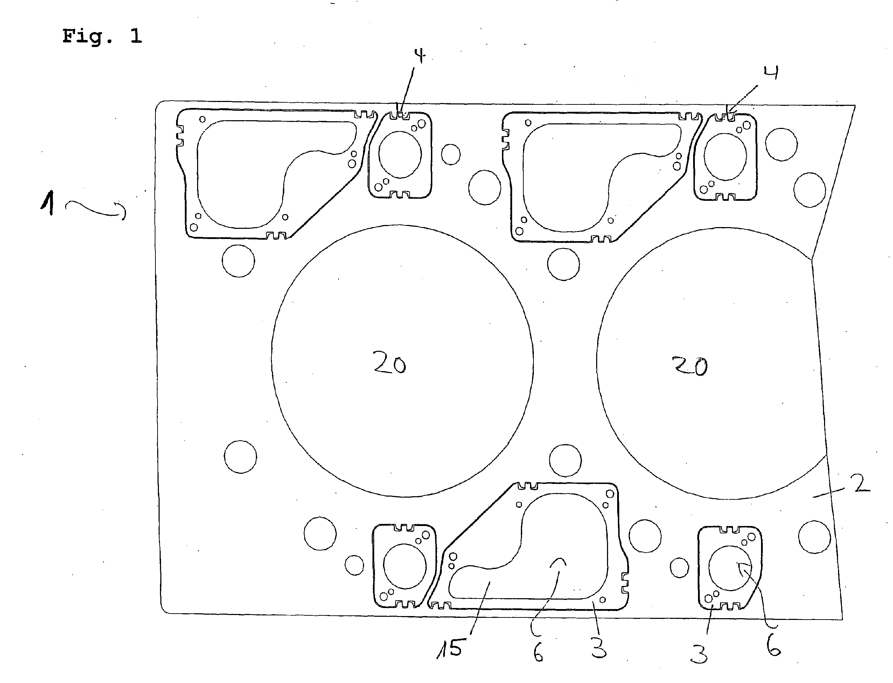

Die Erfindung wird durch die nachfolgenden Figuren 1 bis 8 näher erläutert. Die Figuren stellen nur Beispiele einer erfindungsgemäßen Dichtung dar. Die Figuren beschreiben lediglich beispielhaft einige spezielle Ausgestaltungen der Erfindung, ohne dass die Erfindung jedoch auf diese beschränkt wäre. Die Darstellung anhand einer Zylinderkopfdichtung soll keine Einschränkung auf diesen Dichtungstyp bedeuten, vielmehr können z.B. auch Krümmerdichtungen gemäß der Erfindung ausgeführt sein. Es sind nur Beispiele gewählt, bei denen die Inserts aus dem dünneren Blech hergestellt wurden, die Erfindung schließt aber ausdrücklich die Anordnung mit Inserts aus dickerem Blech ein.

Figur 1 zeigt in der Draufsicht ausschnittsweise einen Teil einer metallischen Zylinderkopfdichtung mit mehreren erfindungsgemäß befestigten Inserts.

Figur 2 zeigt in vergrößerter Darstellung eine erste Ausführungsform einer erfindungsgemäßen einlagigen metallischen Zylinderkopfdichtung, wobei der unverpresste Zustand dargestellt ist.

Figur 3 zeigt die Ausführungsform der metallischen Zylinderkopfdichtung nach Figur 2, jedoch hier im verpressten Zustand.

Figur 4 zeigt eine weitere Ausführungsform einer erfindungsgemäßen einlagigen metallischen Zylinderkopfdichtung mit einer bevorzugten Ausbildung des Verbindungsbereiches.

Figur 5 zeigt eine Ausführungsform der erfindungsgemäßen Zylinderkopfdichtung mit einer weiteren bevorzugten Ausführungsform des Verbindungsbereiches.

Figur 6 zeigt eine eine einlagige metallische Zylinderkopfdichtung mit einer weiteren erfindungsgemäßen Ausbildung des Erfindungsbereiches.

Figur 7 zeigt in der Draufsicht ausschnittsweise eine metallische Zylinderkopfdichtung nach der Erfindung in einer zweilagigen Variante.

Figur 8 zeigt den Schnitt B-B durch die Zylinderkopfdichtung nach der Ausführungsform der Figur 7.

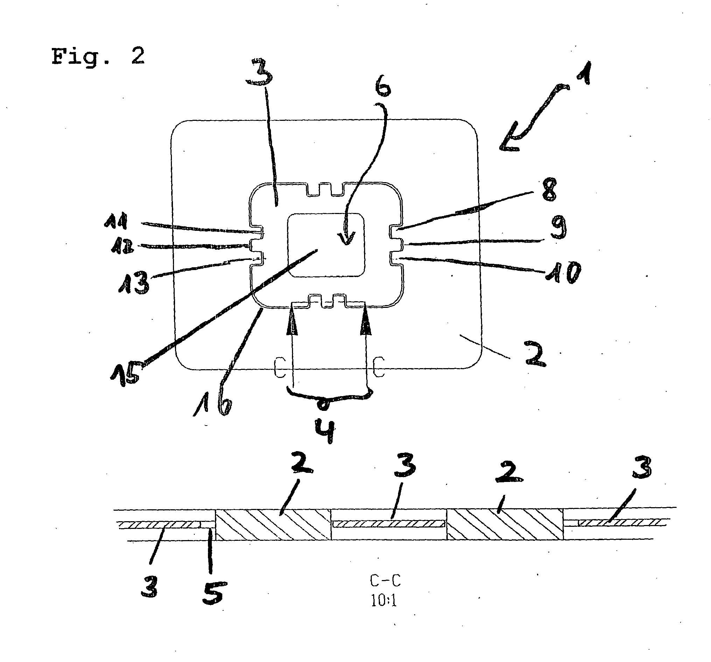

Figur 1 zeigt nun in der Draufsicht eine metallische Flachdichtung in Form einer metallischen Zylinderkopfdichtung 1 aus einer ersten metallischen Lage 2, bei der in mehreren Durchgangsöffnungen 6 eine zweite metallische Lage 3 befestigt ist. Die in der Durchgangsöffnung 6 befestigte zweite metallische Lage wird nachfolgend als Insert bezeichnet. Da das Insert selbst einen Durchbruch 15 aufweist, ist die Öffnung in der metallischen Lage 2 entsprechend verkleinert. Bei der Ausführungsform nach der Figur 1 sind dabei die Brennräume mit 20 bezeichnet. Die Inserts bzw. die zweiten metallischen Lagen 3 sind über mehrere Verbindungsbereiche 4 mit der ersten metallischen Lage 2 verbunden. Die genaue Ausbildung des Verbindungsbereiches 4 ist in den Figuren 2 bis 6 näher dargestellt.

Figur 2 zeigt eine erste Ausführungsform der erfindungsgemäßen Zylinderkopfdichtung in der Draufsicht und im Schnitt durch den Verbindungsbereich im unverpressten Zustand.

Die erfindungsgemäße metallische Zylinderkopfdichtung 1 besteht dabei aus einer ersten metallischen Lage 2 und einer zweiten metallischen Lage 3, wobei die zweite metallische Lage 3 in der ersten metallischen Lage 2 über den Verbindungsbereich 4 befestigt ist. Wesentliches Element der erfindungsgemäßen metallischen Zylinderkopfdichtung ist nun die Ausbildung des Verbindungsbereiches 4 zum Befestigen der zweiten metallischen Lage 3, d.h. der Inserts. Wie aus der Figur 2 hervorgeht, ist das Insert in die erste metallische Lage 2 so eingefügt, dass vor dem Prägen ein Spalt 16 umlaufend, unter Einbeziehung der abschnittsweisen Freimachungen 5, vorhanden ist. Insbesondere im Bereich der Freimachungen 5 ist es bevorzugt, dass sich der Spalt verbreitert, im übrigen Verlauf kann der Spalt 16 ansonsten umlaufend gleich bleibend oder sich ändernd ausgebildet sein. Wesentlich ist in jedem Falle, dass ein Spalt vorhanden ist, um unnötige Spannungen zwischen den beiden metallischen Lagen 2 und 3 zu vermeiden.

Die Ausbildung des Verbindungsbereiches 4 bei der Ausführungsform nach der Figur 2 ist nun so gestaltet, dass die erste metallische Lage im Verbindungsbereich Vorsprünge 8 und 10 und eine Ausnehmung 9 aufweist. Die komplementäre Struktur des Inserts 3 weist dementsprechend zwei Ausnehmungen 11 und 13 und einen Vorsprung 12 auf. Figur 2 zeigt weiterhin den Schnitt C-C durch die metallische Zylinderkopfdichtung nach der Ausführung der Figur 2, wobei hier der unverprägte Zustand gezeigt ist. Das Insert, d.h. die zweite metallische Lage 3, ist demnach in die erste metallische Lage 2 unter Belassung eines Spaltes 16 mit abschnittsweisen Freimachungen 5 in die metallische Lage 2 eingefügt worden.

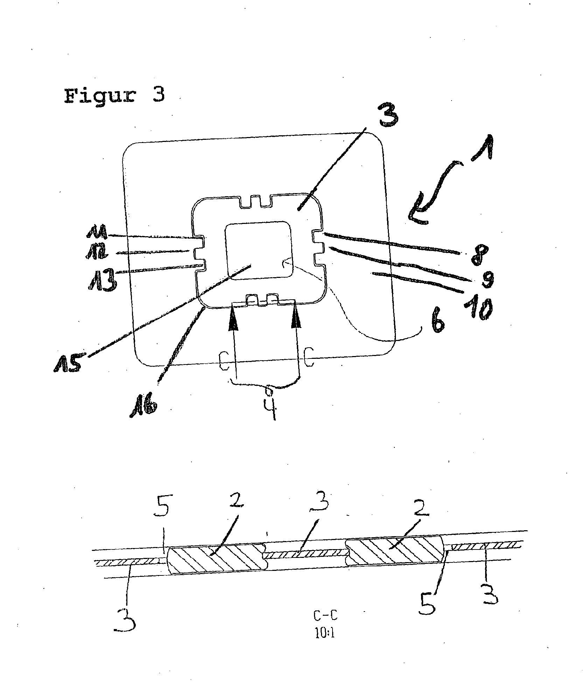

Figur 3 zeigt nun die identische Ausführungsform nach Figur 2, jedoch, wie der Schnitt C-C zeigt, den Zustand nach dem Verpressen. Wie aus dem Schnitt C-C der Figur 3 hervorgeht, sind nun die Vorsprünge 8 und 10 durch Verprägen so ausgebildet worden, dass sie die komplementäre Struktur der zweiten metallischen Lage 3 zumindest bereichsweise von oben und unten übergreifen. Wesentlich ist nun, dass der Verbindungsbereich 4 so gestaltet ist, dass beim Verprägen die Freimachung 5 zwar verkleinert wird, den Spalt 16 aber auch nach dem Verprägen noch umläuft. Die Verkleinerung der Freimachung beim Verpressen wird auch aus dem Vergleich der Schnitte C-C in Figuren 2 und 3 deutlich. Der Spalt 16 und die in ihm abschnittsweise vorhandenen Freimachungen 5 sind deshalb wichtig, da dadurch ein spannungsfreier Einbau ermöglicht wird. Durch die Belassung der Freimachung 5 und des Spalts 16 ist noch genügend Platz vorhanden, um eine Ausdehnung oder ein Verwerfen der beiden metallischen Lagen zueinander zu vermeiden.

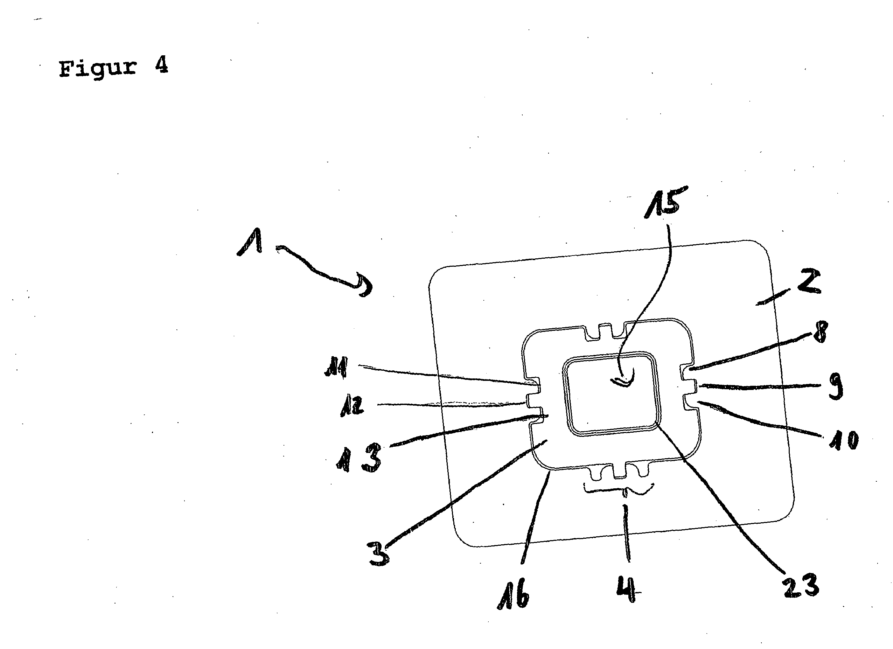

Figur 4 zeigt nun eine zweite Ausführungsform einer erfindungsgemäßen metallischen Zylinderkopfdichtung 1. Der Aufbau der metallischen Zylinderkopfdichtung nach der Ausführungsform nach Figur 4 entspricht im Prinzip dem nach Figur 2 und 3. Unterschiedlich ist hier jedoch die Ausbildung des Verbindungsbereiches 4. Die Vorsprünge 8, 10 der metallischen Lage 2 sind dabei so aufgebaut, dass sie abgeflachte Seitenteile besitzen. Die komplementären Ausnehmungen 11 und 13 der zweiten metallischen Lage 3 sind hingegen analog Ausführungsform nach Figur 2 und 3 gestaltet. Durch diese Abwandlung wird eine noch breitere Freimachung 5 realisiert, die den Vorteil besitzt, dass hier durch die größere Breite der Freimachung 5 der spannungsfreie Einbau noch besser gewährleistet ist. Das Ausführungsbeispiel nach Figur 4 zeigt zudem, dass nicht alle Vorsprung/Ausnehmung/Vorsprung-Kombinationen identisch gestaltet sein müssen. Der Durchbruch 15 im Insert 3 ist stirnseitig mit einem Elastomer 23 angespritzt worden, um eine zusätzliche Abdichtung zu erreichen.

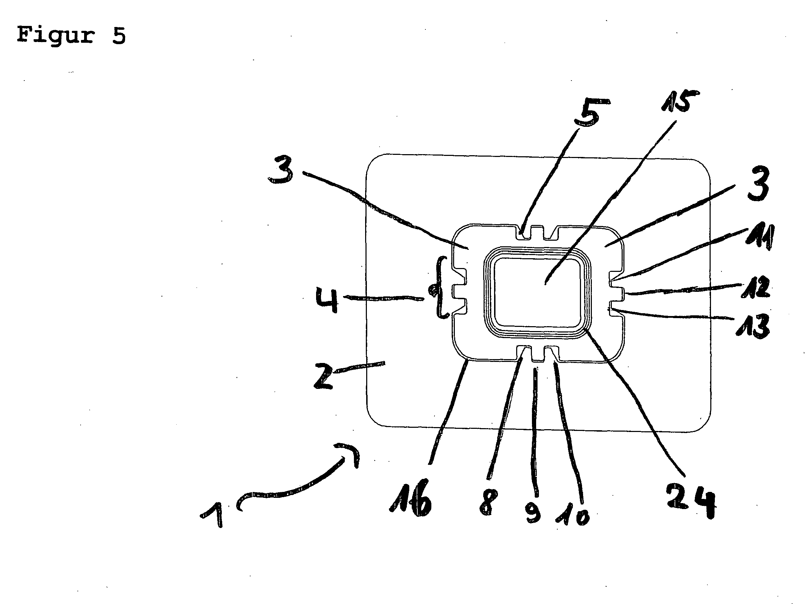

Eine weitere Ausführungsform ist in Figur 5 dargestellt, bei der wiederum die Vorsprünge 8 und 10 der ersten metallischen Lage 2 eine abgewandelte Form besitzen. Der dabei realisierte Spalt 16 mit Freimachungen 15 ist noch breiter als derjenige, der bei der Ausführungsform nach Figur 4 gezeigt ist. Aus Figur 5 ist wiederum auch zu entnehmen, dass der umlaufende Spalt 16 zwischen dem Insert, d.h. der zweiten metallischen Lage 3, und der ersten metallischen Lage 2, sich im Bereich der Freimachungen 5 ändert. In den jeweiligen Rundungen des Verbindungsbereiches ist der Abstand breiter als auf den jeweiligen Längsseiten. Im Unterschied zur Ausführungsform nach Figur 4 weist die Zylinderkopfdichtung nach der Figur 5 eine oberflächlich auf das Insert aufgebrachte Elastomerraupe 24 zur zusätzlichen Abdichtung auf.

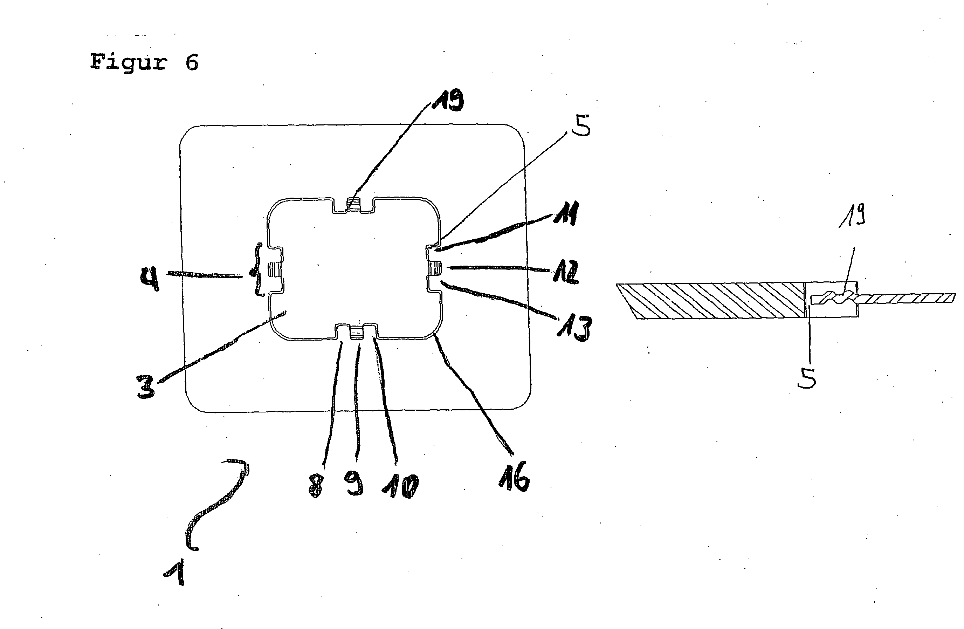

In Figur 6 ist letztlich eine weitere Ausführungsform einer erfindungsgemäßen Zylinderkopfdichtung 1 dargestellt, bei der jedoch im Verbindungsbereich zusätzlich Profilierungen 19 eingeprägt worden sind (siehe Schnittdarstellung). Die Profilierungen dienen der Versteifung der Vorsprünge und führen dazu, dass die beim Verprägen eingeleiteten Kräfte besser aufgenommen werden. Der Aufbau der Zylinderkopfdichtung 1 nach der Figur 6 entspricht ansonsten der, wie sie in den Figuren schon beschrieben ist, nämlich aus einer ersten metallischen Lage 2 und einem Insert 3 sowie einem Verbindungsbereich 4 mit den Vorsprüngen 8 und 10 sowie der Ausnehmung 9 und den komplementären Strukturen 11, 12 und 13 im Insert. Zu bemerken ist, dass, wie in Figur 6 gezeigt, die Erfindungen auch Ausführungsformen umfasst, bei denen das Insert keinen Durchbruch aufweist. Dies ist z.B. bei modularer Bauweise nötig, wenn für mehrere Motoren zwar mit derselben Trägerplatte aber teilweise abweichend angeordneten Durchgangsöffnungen gearbeitet wird.

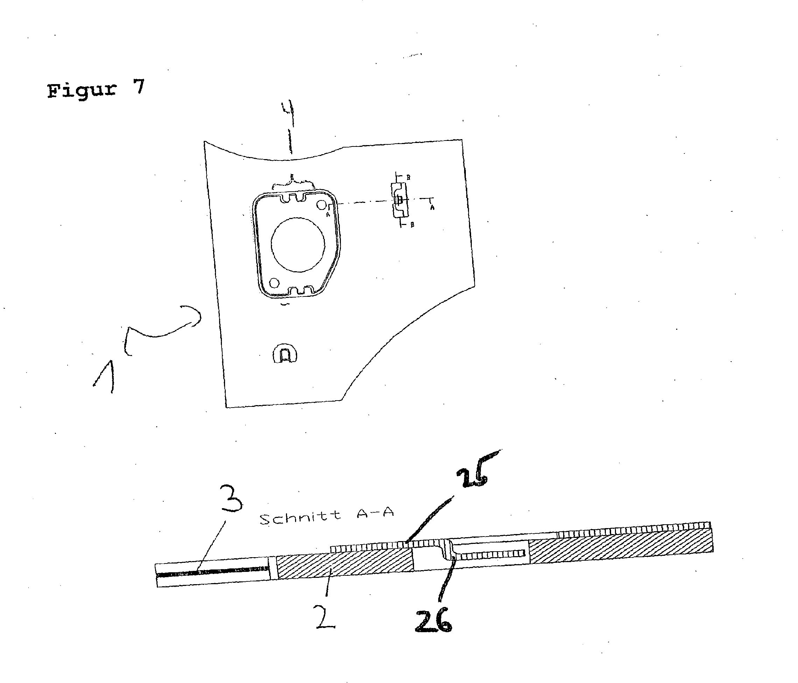

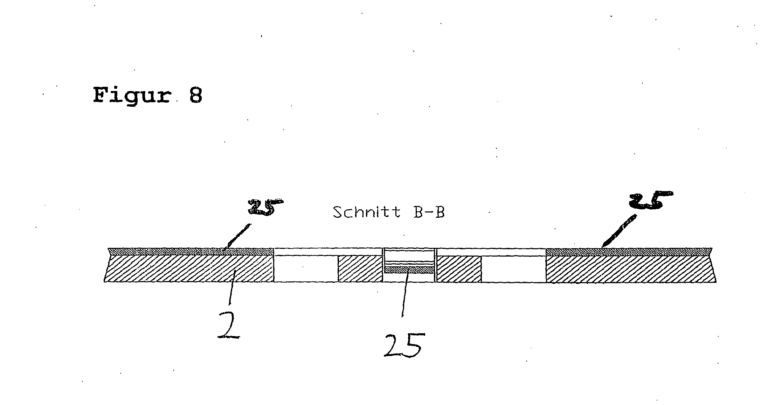

Figur 7 zeigt nun eine Ausführungsform einer mehrlagigen metallischen Zylinderkopfdichtung 1, die neben Trägerblech und Inserts eine weitere großflächige Dichtungslage, auch als Distanzbelch 25 bezeichnet, aufweist. Die Ausbildung des in Figur 7 dargestellten Inserts entspricht in Bezug auf den Befestigungsbereich 4 im Wesentlichen den Ausführungsformen, wie sie bisher schon in den Figuren 2 bis 6 näher beschrieben worden sind. Wesentliches Element der Ausführungsform nach der Figur 7 ist, dass bei dieser Ausführungsform eine weitere metallische Lage 25 vorgesehen ist, die über eine Kröpfung 26 in eine Ausnehmung im Trägerblech eingreift. Die jeweiligen Schnittdarstellungen Schnitt A-A in Figur 7 und Schnitt B-B in Figur 8 zeigen die genaue Ausbildung der ineinander greifenden Lagen im Bereich der Kröpfung.

## Patentansprüche

1. Metallische Flachdichtung (1) zur Abdichtung von zwei Bauteilen gegeneinander aus mindestens einer ersten metallischen Lage (2) mit mindestens einer Durchgangsöffnung (6) und mit einer in der mindestens einen Durchgangsöffnung (6) befestigten zweiten metallischen Lage(3),
**dadurch gekennzeichnet, dass**
die zweite metallische Lage (3) in die mindestens eine Durchgangsöffnung (6) der ersten metallischen Lage (2) einen Spalt (16) bildend eingefügt ist, wobei die erste und/oder zweite metallische Lage (2, 3) über mindestens einen Verbindungsbereich (4) aus mindestens einer Vorsprung/Ausnehmung/Vorsprung-Kombination mit der anderen metallischen Lage mit einer mindestens komplementären Struktur derart verbunden ist, dass die Vorsprünge (8, 10) der die Vorsprung/Ausnehmung/Vorsprung-Kombination aufweisenden Lage im Bereich der komplementären Ausnehmungen (11, 13) der anderen metallischen Lage diese Lage unter Belassung einer abschnittsweisen Freimachung (5) im Verbindungsbereich (4) nur teilweise von der Ober- und Unterseite übergreifen.

2. Metallische Flachdichtung nach Anspruch 1, **dadurch gekennzeichnet, dass** die Freimachung (5) im Verbindungsbereich (4) auf beiden Außenseiten ausgebildet ist.

3. Metallische Flachdichtung nach Anspruch 1 oder 2, **dadurch gekennzeichnet, dass** der Spalt (16) und/oder fortlaufend die Freimachungen (5) zwischen der ersten und zweiten metallischen Lage umlaufend sich ändernd ausgebildet ist.

4. Metallische Flachdichtung nach einem der Ansprüche 1 oder 3, **dadurch gekennzeichnet, dass** der Vorsprung (8, 10, 12) rechteckig, tropfenförmig, trapezförmig und/oder flammenförmig ist.

5. Metallische Flachdichtung nach mindestens einem der Ansprüche 1 bis 4, **dadurch gekennzeichnet, dass** die Vorsprung/Ausnehmung/Vorsprung-Kombination in der Dimensionierung so gewählt ist, dass die mittlere Breite der Ausnehmung (9) kleiner ist als das zweifache der Summe, bevorzugt als die Summe, der mittleren Breite der Vorsprünge (8, 10).

6. Metallische Flachdichtung nach Anspruch 5, **dadurch gekennzeichnet, dass** die mittlere Breite der Ausnehmung (9) zwischen 0,8- und 1,2-fach des Mittelwertes der Breite der Vorsprünge (8, 10) ist.

7. Metallische Flachdichtung nach mindestens einem der Ansprüche 1 bis 6, **dadurch gekennzeichnet, dass** die Anzahl der Verbindungsbereiche (4) in Abhängigkeit von der Geometrie der Durchgangsöffnung (6) ausgewählt ist.

8. Metallische Flachdichtung nach Anspruch 7, **dadurch gekennzeichnet, dass**, bezogen auf den Schwerpunkt der zweiten metallischen Lage (3), die Verbindungsbereiche (4) um mindestens 30°, bevorzugt um mindestens 60°, des Kreiswinkels versetzt angeordnet sind.

9. Metallische Flachdichtung nach Anspruch 7, **dadurch gekennzeichnet, dass** die Verbindungsbereiche (4) an mindestens zwei Seiten der Durchgangsöffnung (6) angeordnet sind.

10. Metallische Flachdichtung nach Anspruch 9, **dadurch gekennzeichnet, dass** die Verbindungsbereiche (4) an mindestens zwei gegenüberliegenden Seiten der Durchgangsöffnung (6) angeordnet sind.

11. Metallische Flachdichtung nach mindestens einem der Ansprüche 1 bis 10, **dadurch gekennzeichnet, dass** die Vorsprünge (8, 10, 12) der metallischen Lage (2, 3) herausragend und/oder als Rücksprung in der Lage ausgebildet sind.

12. Metallische Flachdichtung nach mindestens einem der Ansprüche 1 bis 11, **dadurch gekennzeichnet, dass** neben den Verbindungsbereich (4) mit der Vorsprung/Ausnehmung/Vorsprung-Kombination zusätzlich Verbindungsstellen aus Vorsprüngen und komplementären Ausnehmungen ausgebildet sind.

13. Metallische Flachdichtung nach einem der Ansprüche 1 bis 12, **dadurch gekennzeichnet, dass** die Materialstärke der metallischen Lage (2, 3) im Verbindungsbereich (4), der die Vorsprung/Ausnehmung/Vorsprung-Kombination aufweist, größer ist als die Materialstärke im Bereich der die komplementäre Struktur aufweisenden anderen metallischen Lage.

14. Metallische Flachdichtung nach Anspruch 13, **dadurch gekennzeichnet, dass** die Materialstärke der Vorsprünge (8, 10) 0,3 bis 3 mm, bevorzugt 0,5 bis 1,5 mm, beträgt.

15. Metallische Flachdichtung nach mindestens einem der Ansprüche 1 bis 14, **dadurch gekennzeichnet, dass** die Vorsprünge (8, 10) der die Vorsprung/Ausnehmung/Vorsprung-Kombination aufweisenden metallischen Lage aus einem verformbaren Metall, bevorzugt ausgewählt aus Stahl, Kupfer und Kupferlegierungen, insbesondere verformbarem Kohlenstoffstahl und verformbarem Edelstahl, bestehen.

16. Metallische Flachdichtung nach mindestens einem der Ansprüche 1 bis 15, **dadurch gekennzeichnet, dass** das Übergreifen des Vorsprungs (8, 10) über die andere Lage im Bereich der komplementären Strukturen (11-13) durch Verprägen hergestellt worden ist.

17. Metallische Flachdichtung nach mindestens einem der Ansprüche 1 bis 16, **dadurch gekennzeichnet, dass** die in die erste metallische Lage (2) eingefügte zweite metallische Lage (3) mindestens einen Durchbruch (15) aufweist.

18. Metallische Flachdichtung nach einem der Ansprüche 1 bis 17, **dadurch gekennzeichnet, dass** die zweite metallische Lage (3) auf mindestens einer Oberfläche in Form einer Raupe (24) mit einem Elastomer angespritzt und/oder am stirnseitigen Durchbruch (15) mit einem Elastomer (23) umspritzt ist.

19. Metallische Flachdichtung nach mindestens einem der Ansprüche 1 bis 18, **dadurch gekennzeichnet, dass** die die Vorsprung/Ausnehmung/Vorsprung-Kombination aufweisende Lage die erste metallische Lage ist.

20. Metallische Flachdichtung nach Anspruch 19, **dadurch gekennzeichnet, dass** auf der ein Trägerblech bildenden ersten metallischen Lage (3) ein Deckblech (25) angeordnet ist, das mindestens einen, bevorzugt mindestens zwei Vorsprünge aufweist, die jeweils über eine Kröpfung (26) in einer entsprechenden Ausnehmung im Trägerblech zu liegen kommen und diese mit dem Trägerblech über komplementäre Ausnehmungen dieses von der Ober- und Unterseite mindestens teilweise übergreifend, befestigt sind.

21. Verfahren zur Herstellung einer metallischen Flachdichtung nach mindestens einem der Ansprüche 1 bis 20, **dadurch gekennzeichnet, dass** die zweite metallische Lage (3) in die erste metallische Lage (2) unter Belassung eines umlaufenden Spaltes (16) eingefügt wird und dass durch ein Prägeverfahren mindestens die Vorsprünge (8, 10) der die Vorsprung/Ausnehmung/Vorsprung-Kombination aufweisenden Lage so verformt werden, dass ein Form- und/oder Kraftschluss im Verbindungsbereich zwischen den Vorsprüngen der einen metallischen Lage (8, 10) und den komplementären Strukturen der anderen Lage eintritt.
